# EUROPEAN PATENT SPECIFICATION

(11) **EP 2 729 021 B1**
(45) Date of publication and mention of the grant of the patent: **13.04.2016**
(21) Application number: 12721214.0
(22) Date of filing: 01.05.2012
(51) Int. Cl.: A23L 29/256, A23L 29/269, A23L 23/00, A23L 27/00

(54) **GEL COMPOSITION**
GELZUSAMMENSETZUNG
COMPOSITION DE GEL

(30) Priority: 07.07.2011 WO PCT/CN2011/076937
(43) Date of publication of application: 14.05.2014
(73) Proprietor: Nestec S.A., 1800 Vevey (CH)
(72) Inventor: WANG, Yu, Shanghai 201800 (CN); LIAN HWEE PENG, Rebecca, Beijing 101300 (CN)
(74) Representative: Mollet, Beat Max
(86) International application number: PCT/EP2012/057949
(87) International publication number: WO 2013/004413

(56) References cited:
- EP-A2- 1 074 183
- WO-A1-2008/074600
- WO-A1-2011/076528

## Description

### TECHNICAL FIELD

This invention relates to a gel composition for preparing a food product and to a process for preparing a food product. In particular, the invention relates to a heat-reversible gel composition comprising both agar and xanthan as gelling agents for preparing savoury gelled food products.

### BACKGROUND

Concentrated food products such as bouillon or stock cubes have been known for many years. In the search for alternative product types having different characteristics and advantages over traditional food concentrates, food compositions concentrated in gel form have been developed. A number of such products are now known. They are typically based on the presence of a gelling agent or a combination of two or more gelling agents.

Those products based on a single hydrocolloid gelling agent usually do not exhibit all the characteristics needed for an easy to use food concentrate product. Thus, two-component hydrocolloid based gel systems have been developed. These each have their characteristics which may make them suitable for some food applications, but not others.

Gelatin is commonly used in the food industry to produce gelled savoury products such as aspics. Vegetarian alternatives to gelatin have been developed over many years, with carrageenans being one of the most used replacers for gelatin especially in sweet products such as jellies.

Agar is another commonly used food ingredient. Many sweet products, such as jellies, and meat-based canned foods contain agar. Agar has specific physical characteristics. It will melt when heated to 85 °C and will form a gel structure below 40 °C. In addition, liquefied agar has a lower viscosity and better flowability than starch and many other gums.

Attempts have been previously made to find improved gelling ingredients that are suitable for concentrated food products. Combinations of two hydrocolloid polysaccharides have been found to exhibit suitable gelling properties. For example, WO 2011/076528, WO 2007/068484, WO 2008/151850, WO 2008/151851 and WO 2008/151852 describe a combination of xanthan and various galactomannans (locust bean gum, tara gum, guar gum or cassia gum) as gelling agents. One problem with these combinations is that when increasing the salt content of the food product, the dosage of the gelling agents needs to be increased since the gel loses strength as the salt content is increased. There is a need for a gelling agent composition which is stable over a wide range of salt concentrations. Another problem is that theses combinations, when used to make a soup or sauce, are still able to form a gel very quickly during cooling. This can lead to an undesired texture for consumption of the product when the dish is cooling. There is therefore a need for a gelling agent composition which does not gel during the normal food consumption times.

WO 2008/151852 describes the use of xanthan and cassia gum. This combination suffers from the problem that cassia gum is not available in the quantities required for industrial production in food grade quality, or is very expensive. Furthermore, the regulatory status of cassia gum is still not clear in many countries, making its use in industrial products difficult.

A combination of gelatin and starch is described in WO 2007/068402 and WO 2007/068483. The main problem with this combination is that a very high dosage of gelling agent is needed (greater than 10 %). Also, gelatin is not popular as a food ingredient with those on a vegetarian diet.

Another problem with these gelling agents is that they can substantially thicken ingredient mixtures during processing and cause the formation of lumps and make dissolving of ingredients difficult.

Gel compositions or gelled food products including xanthan gum and agar are known. However, these compositions or food products typically also include other gelling or thickening agents, such as carrageenan, locust bean gum, glucomannan, galactomannan, konjak mannan. Most foods based on these agents are dairy foods or sweet foods such as fruit jellies.

EP 0931463 is one example of such a composition. This document discloses a simple method for industrially manufacturing jelly products having a fibrous texture in uniform quality. The jelly products include a liquid material, which contains a gum substance selected from xanthan gum, gum arabic and pullulane, and also a gelling agent selected from agar-agar, furcellaran and carrageenan. This gel system is for uniform jelly dispersion in a fruit beverage, and is not suited for a savoury product containing a high level of salt as well as fat, spices and other savoury ingredients.

EP 1074183 discloses jelly foods containing agar, xanthan and locust bean gum. The jelly foods have sarcocarp like granules and texture simulating various citrus fruits and can be produced by admixing agar with xanthan gum and locust bean gum at a certain ratio. The jelly foods are fruit jellies.

JP 2009045018 discloses a method for producing a gel-like food. The gel-like food includes agar, xanthan gum and an additional component which may include galactomannan and/or glucomannan. Again, the product is a sweet food.

JP 2000189073 discloses a sweet gelatinous food having acid resistance, longer palatable period and a sarcocarp-like food feeling irrespective of seasons. The gelatinous food is produced by preparing a blended product consisting of agar, xanthan gum and glucomannan.

US 20030138938 discloses an agar composition and a thickening agent prepared in the form of a gel. The thickening agent may be locust bean gum, konjak mannan, tara gum. or xanthan gum. Again, the composition is intended for a sweet food.

JP 2008237186 discloses a gelled liquid food containing agar, xanthan gum, and carrageenan. This drinkable gel is intended for people with gastric problems.

JP 2007159564 discloses noodles imparted with smoothness in a well-balanced manner while imparting resilience or firmness enough to eat without affecting flavor. A texture improver for noodles including rhamsan gum is provided. Furthermore, one or more components selected from xanthan gum, agar and alginic acid may be included in this texture improver.

JP 63251051 discloses a preparation method for a cupped food. A liquid food is put into a cup, essentially de-aerated, sealed with a lid, and sterilized. The preparation method includes adding a gelling agent (e.g. gelatin and agar) and/or a thickener (e.g. sodium alginate and xanthan gum). The reason for forming a gel is to prevent spill of the liquid.

US 6,106,867 discloses gelatinized propolis food products. The propolis food products containing propolis extracts are gelled by gelatinizers. The gelantilizers are materials such as shiitake extracts, curdlan, agarics extracts, and further include xanthan gum, locust bean gum, carrageenan, or agar. A preparation method for the gelation composition including carrageenan, locust bean gum, and agar is disclosed. A preparation method for a gelation composition including locust bean gum, xanthan gum, agar, and chondroitin sulfate is also disclosed.

JP 2001-258517 describes the use of agar, xanthan and locust bean gum. The possible use of carrageenan instead of xanthan and locust bean gum is also mentioned. But this gelling composition suffers from the problem that the composition cannot be melted quickly when reheated and added to hot water. An easy melting gel is an important characteristic desirable for concentrated food products.

The abovementioned gel-based products are edible or drinkable foods. They are not concentrated products from which foods such as sauces, soups and gravies can be made. The preparation of gel products that are in concentrated form presents additional challenges, particularly for savoury products having high concentrations of salt. Such products do not easily form gels. However, it has now been found that a combination of agar and xanthan has certain desirable and surprising characteristics that make it suitable for concentrated savoury food products including the formation of a gel that is elastic, but not too rigid, has good shelf-life stability, and a low tendency for syneresis.

An object of the present invention is therefore to provide a gel composition that at least goes part way to overcoming one or more of the above disadvantages of existing gel compositions or at least provides a useful alternative.

### SUMMARY OF THE INVENTION

In a first aspect of the invention there is provided a composition in the form of a gel for preparing a food product, the composition comprising:
a) water in the amount of 30 to 70 % (by weight of the total composition),
b) flavourings in the amount of 1 to 40 % (by weight of the total composition),
c) salt in the amount of 10 to 25 % (by weight of the total composition), and
d) gelling agents in the amount of 0.15 to 12 % (by weight of the total composition),
wherein the gelling agents comprise at least agar and xanthan.

The amount of gelling agents in the composition may preferably be 0.2 to 2 %. The ratio of agar and xanthan is preferably in the range of 80:20 to 20:80, more preferably 70:30 to 30:70, and even more preferably 50:50 to 60:40. The gelling agents may further comprise starch or carrageenan.

The composition may also comprise fat or oil, preferably in the amount of 1 to 10 %. The amount of water is preferably in the range 40 to 60 %, more preferably 45 to 60 %. Flavorings are included in the composition typically in the amount of 1 to 30%, preferably 5 to 15%.

In preferred embodiments of the invention, the composition is adapted to be heat reversible, meaning that it melts when reheated to a temperature above 90 °C and dissolves when added to boiling water in less than 5 minutes.

The composition of the invention may be used to prepare any suitable food product, especially sauces, soups, stocks, bouillons or gravies.

In a second aspect of the invention there is provided a process for preparing a composition in the form of a gel for preparing a food product comprising the steps:
a) adding gelling agents including at least agar and xanthan to water, and mixing,
b) heating to a temperature of at least 75 °C, preferably at least 80 °C,
c) adding salt and flavourings, and mixing,
d) heating at a temperature of at least 75 °C, preferably at least 80 °C, for a time sufficient to pasteurize the mixture, and
e) cooling to room temperature to form the gel.

The process may further comprise making a premix of the gelling agents with maltodextrin or sugar and/or starch. The process may also comprise adding fat after mixing of the gelling agents.

In another aspect of the invention there is provided a use of the composition of the invention for preparing a food product, such as a sauce, soup, stock, soup base, bouillon or gravy.

### DETAILED DESCRIPTION

There is a need for a composition for preparing a food product having the texture of a gel and which is able to withstand high salt contents. The gel-forming composition should be able to set and melt reversibly. The melting temperature should be in a range allowing the composition to melt easily during a standard heating step or to allow dilution of the gel composition in hot water. Further, there is a need for a gel composition for preparing a food product that is stable during transportation and storage, and shows a low syneresis during storage typically for a few weeks or even up to several months.

It has now been found that these benefits may be achieved at least in part by a gel composition for preparing a food product comprising: 30 to 70 % water, 10 to 25 % salt, and 0.15 to 12 % gelling agents, wherein the gelling agents comprises at least agar and xanthan. In addition, the composition comprises 1 to 40 % of other ingredients typically encountered in savoury products such as flavourings, for example flavouring agents, taste enhancing ingredients, herbs, spices, vegetables, meat and fish components (in liquid or powder form), lipids, and carbohydrates or mixtures thereof.

All percentages used in this specification, unless otherwise indicated, are based on weight of the total composition.

The term "gel", in the context of this invention, means a solid or semi-solid matrix formed by interaction with one or more polysaccharides and water, which is free standing over a time scale of at least a few minutes and which deforms partially in an elastic way when submitted to a deformation force.

The term "heat reversible" indicates a gelling agent composition that is liquid at elevated temperatures, forms a gel during cooling to room temperature and melts again when reheated.

"Salt" refers to any suitable alkali metal salt or mixture thereof. The salt used in the composition of this invention is typically, but not limited to, sodium chloride. For example, potassium chloride may be used or any low-sodium product having a taste impression of sodium chloride may be used, as long as the taste in the end formulation is acceptable.

"Agar" is a gelatinous substance derived from a polysaccharide that accumulates in the cell walls of agarophyte red algae. Agar consists of a mixture of agarose and agaropectin. Agarose is a linear polymer made up of the repeating monomeric units of agarobiose. Agarobiose is a disaccharide made up of D-galactose and 3,6-anhydro-L-galactopyranose. Agaropectin is a heterogeneous mixture of smaller molecules that occur in lesser amounts. Their structures are similar but slightly branched and sulfated, and they may have methyl and pyruvic acid ketal substituents. Agar exhibits hysteresis, melting at 85 °C and solidifying at 32-40 °C. This property provides a suitable balance between easy melting and good gel stability at relatively high temperatures.

"Xanthan" is a hetero-polysaccharide of high molecular weight commonly used as a food thickening agent (for example, in salad dressings) and as a stabiliser (for example, in cosmetic products). Its main chain is constituted of glucose units and its side chain is a trisaccharide consisting of alpha-D-mannose which contains an acetyl group, beta-D-glucuronic acid, and a terminal beta-D-mannose unit linked with a pyruvate group. Xanthan shows very high compatibility with salts, for example up to 25 %, and provides high elasticity.

The term "flavourings", as used in this specification, includes flavouring agents, taste enhancing ingredients, herbs, spices, vegetables, fruits, meat, fish, crustaceans or particulates thereof.

The composition may comprise further ingredients selected from carbohydrates, lipids, or mixtures thereof. The lipids may be provided by oils, creamer, vegetable or animal fats, cream and any traditional ingredients used in the manufacture of savoury food compositions. Carbohydrates may be provided by sugars, starches, flours, maltodextrins, glucose syrups etc.

As used in this specification, the words "comprises", "comprising", and similar words, are not to be interpreted in an exclusive or exhaustive sense. In other words, they are intended to mean "including, but not limited to".

Further, any reference in this specification to prior art documents is not intended to be an admission that they are widely known or form part of the common general knowledge in the field.

The inventors of the present invention have surprisingly found that combining xanthan with agar reduces the dissolution time of the gel when added to hot water and enables the gel to melt when reheated to temperatures above 85 °C. Further, combining xanthan with agar enables modulation of the texture of a pure agar gel (providing increased elasticity) and also reduces the syneresis normally observed with agar gels.

Agar and xanthan are readily available materials in many countries. They are not expensive. The combination of agar and xanthan has several benefits for gel-based concentrated savoury food products. The gel structure is elastic, not too rigid, and has a certain strength. This means that a gel product can be poured from a container, e.g. a capsule, as a single piece. The gel is stable throughout the shelf-life of the product. It has a low tendency for syneresis, and it is tolerant to the high salt levels that are needed for the microbial safety of many concentrated savoury food bases. In addition, the combination of agar and xanthan leads to a gel that is stable during transportation and storage. This is important in hot climates because agar melting can occur above approximately 60 °C. The excellent flowability of gels based on agar and xanthan make stirring and filling easy, which is important for manufacturing processes. Further, consumers experience a smooth mouth feel and no lingering mouth coating on consuming a food product that has been reconstituted from the gel concentrate.

The concentration range of the gelling agents in the gel composition of the invention is 0.15 to 12 %, preferably 0.6 to 2 % (based on the total weight of the composition).

The gelling agents are agar and xanthan, and may additionally comprise other agents. In the case where only agar and xanthan are present, the ratio of agar to xanthan is preferably in the range of 80:20 to 20:80, and is preferably in the range of 70:30 to 30:70, more preferably 50:50 to 60:40, but may also be any other suitable ratio.

The amount of water in the gel composition is in the range 30 % to 70 %, preferably 40 % to 60 %, more preferably 45 % to 60 %.

The amount of flavorings in the gel composition is in the range 1 to 40 %, preferably 5 to 15 %.

The composition according to the invention may further comprise fat in an amount of 1 to 10 %, such as, for example, emulsified or dispersed oil and/or fat.

The invention further relates to a process for preparing the gel composition of the invention.

The process comprises the steps of adding the ingredients to water and applying at least one additional heating step to the mixture during the process of adding the ingredients.

In particular, the process preferably comprises the steps of making a premix of the gelling agents with sugar or maltodextrins, then dissolving in water. Powder ingredients that are premixed prior to addition, including salt, flavourings and the like, are added. Finally, the fat component is added and the complete composition is heated to 80 °C and held at that temperature for 10-15 minutes to pasteurize the mixture. The composition may then be filled into suitable containers, and left to cool at room temperature. The containers and consequently the cooled composition can have any possible shape, preferably the shape of a cube, pellet, sphere, egg-shape or the like.

The resulting product is a gel composition that is stable at room temperature, melts when reheated to temperatures above 90 °C, and dissolves when added to boiling water in less than 3 minutes, with or without an additional heating step. Stirring with a spoon, for example, can dramatically shorten the preparation time.

The invention further relates to the use of a gel composition for preparing a food product, such as a soup, sauce, bouillon, stock, soup base or gravy, by melting or diluting the composition in hot or boiling water. Typically, the amount of gel composition used would be 25-50 g/L of water, or 25-50 g/kg of, for example, rice or vegetables, if being used directly with solid foods rather than addition to water.

The product of the invention has several advantages over known gel compositions. One advantage is that the gelling process during and after cooling is very slow. Typically it takes a few hours until the gel is properly formed. In contrast, known gel compositions form a gel as soon as the temperature is below 60-50 °C, which can lead to an undesired texture during consumption of the product. If the time between the food product preparation using the gel composition and consumption is too long, the soup or sauce may develop an undesirable gel texture again. The gel composition of the invention enables a non-gelled texture to be maintained for product consumption. Further, slow gelling enables the gel composition to be more easily processed, avoiding fast gelling in processing equipment.

Another advantage is that the gel strength is stable or even increases when salt content increases which enables a very consistent product to be produced even if some variations in the process are encountered (for example, water evaporation during the heating step).

### EXAMPLES

The invention is further described with reference to the following examples. It will be appreciated that the invention as claimed is not intended to be limited in any way by these examples.

### Example 1: gel with xanthan and agar

| **Ingredients** | **Amount (% by weight)** |
|---|---|
| Water | 60 |
| Salt | 25 |
| Oil | 6 |
| Agar | 0.5 |
| Xanthan | 0.5 |
| Other ingredients | Up to 100 |

### Example 2: gel with xanthan and agar

| **Ingredients** | **Amount (% by weight)** |
|---|---|
| Water | 62 |
| Salt | 17 |
| Oil/fat | 4 |
| Agar | 0.6 |
| Xanthan | 0.2 |
| Other ingredients | Up to 100 |

### Example 3: gel with xanthan, agar and starch

| **Ingredients** | **Amount (% by weight)** |
|---|---|
| Water | 70 |
| Salt | 12 |
| Concentrated flavoring base | 6 |
| Sugar | 3 |
| Agar | 0.4 |
| Xanthan | 0.4 |
| Starch | 0.6 |
| Other ingredients | Up to 100 |

### Example 4: gel with xanthan, agar and MSG

| **Ingredients** | **Amount (% by weight**) |
|---|---|
| Water | 60 |
| Salt | 20 |
| MSG | 6 |
| Oil | 5 |
| I+G | 0.2 |
| Agar | 0.2 |
| Xanthan | 0.5 |
| Starch | 0.8 |
| Other ingredients | Up to 100 |

### Example 5: process

The general procedure for preparing gel compositions of the above examples is as follows:
- add water into a mixing vessel
- add gelling agents (preferably premixed with maltodextrin or sugar)
- mix until an homogeneous composition is obtained
- add all remaining ingredients into the vessel
- mix and homogenize until no lumps are visible
- heat at a temperature of 82 °C and pasteurize
- fill a suitable container and close
- allow to cool to room temperature

It is to be appreciated that although the invention has been described with reference to specific embodiments, variations and modifications may be made without departing from the scope of the invention as defined in the claims. Furthermore, where known equivalents exist to specific features, such equivalents are incorporated as if specifically referred to in this specification.

## Claims

1. A composition in the form of a gel for preparing a food product, the composition comprising:
a) water in the amount of 30 to 70 % (by weight of the total composition),
b) flavourings in the amount of 1 to 40 % (by weight of the total composition),
c) salt in the amount of 10 to 25 % (by weight of the total composition), and
d) gelling agents in the amount of 0.15 to 12 % (by weight of the total composition),
wherein the gelling agents comprise at least agar and xanthan.

2. A composition as claimed in claim 1, wherein the amount of gelling agents is 0.2 to 2 % (by weight of the total composition).

3. A composition as claimed in claim 1 or claim 2, wherein the ratio of agar and xanthan is in the range of 80:20 to 20:80, preferably 70:30 to 30:70, more preferably 50:50 to 60:40.

4. A composition as claimed in any one of claims 1 to 3, wherein the gelling agents further comprise starch or carrageenan.

5. A composition as claimed in any one of claims 1 to 4, further comprising fat or oil in the amount of 1 to 10 % (by weight of the total composition).

6. A composition as claimed in any one of claims 1 to 6, wherein the amount of water is in the range 40 to 60 %, preferably 45 to 60 % (by weight of the total composition).

7. A composition as claimed in any one of claims 1 to 6, wherein the amount of flavorings is in the range 1 to 40%, preferably 5 to 15% (by weight of the total composition).

8. A composition in the form of a gel for preparing a food product, the composition comprising agar and xanthan, wherein the composition is adapted to melt when reheated to a temperature above 90 °C and dissolve when added to boiling water in less than 5 minutes.

9. A composition as claimed in any one of claims 1 to 8 which is heat reversible.

10. A composition as claimed in any one of claims 1 to 9, wherein the food product is a sauce, soup, stock, bouillon, soup base or gravy.

11. A process for preparing a composition in the form of a gel for preparing a food product comprising the steps:
a) adding gelling agents including at least agar and xanthan to water, and mixing,
b) heating to a temperature of at least 75 °C, preferably at least 80 °C,
c) adding salt and flavourings, and mixing,
d) heating at a temperature of at least 75 °C, preferably at least 80 °C, for a time sufficient to pasteurize the mixture, and
e) cooling to room temperature to form the gel.

12. A process as claimed in claim 11, further comprising making a premix of the gelling agents with maltodextrin or sugar and/or starch.

13. A process as claimed in claim 11 or claim 12, further comprising adding fat or oil after mixing of the gelling agents.

14. The use of a composition as claimed in any one of claims 1 to 10 for preparing a food product.

## Patentansprüche

1. Zusammensetzung in Form eines Gels zur Herstellung eines Nahrungsprodukts, wobei die Zusammensetzung Folgendes umfasst:
a) Wasser in einer Menge von 30 bis 70 % (bezogen auf das Gewicht der Gesamtzusammensetzung),
b) Aromen in einer Menge von 1 bis 40 % (bezogen auf das Gewicht der Gesamtzusammensetzung),
c) Salz in einer Menge von 10 bis 25 % (bezogen auf das Gewicht der Gesamtzusammensetzung), und
d) Geliermittel in einer Menge von 0,15 bis 12 % (bezogen auf das Gewicht der Gesamtzusammensetzung),
wobei die Geliermittel mindestens Agar und Xanthan umfassen.

2. Zusammensetzung nach Anspruch 1, wobei die Menge an Geliermitteln 0,2 bis 2 % (bezogen auf das Gewicht der Gesamtzusammensetzung) beträgt.

3. Zusammensetzung nach Anspruch 1 oder Anspruch 2, wobei das Verhältnis von Agar und Xanthan im Bereich von 80:20 bis 20:80, vorzugsweise 70:30 bis 30:70, mehr bevorzugt 50:50 bis 60:40 liegt.

4. Zusammensetzung nach einem der Ansprüche 1 bis 3, wobei die Geliermittel ferner Stärke oder Karrageen umfassen.

5. Zusammensetzung nach einem der Ansprüche 1 bis 4, ferner umfassend Fett oder Öl in einer Menge von 1 bis 10 % (bezogen auf das Gewicht der Gesamtzusammensetzung).

6. Zusammensetzung nach einem der Ansprüche 1 bis 6, wobei die Menge an Wasser im Bereich von 40 bis 60 %, vorzugsweise 45 bis 60 % (bezogen auf das Gewicht der Gesamtzusammensetzung) liegt.

7. Zusammensetzung nach einem der Ansprüche 1 bis 6, wobei die Menge an Aromen im Bereich von 1 bis 40 %, vorzugsweise 5 bis 15 % (bezogen auf das Gewicht der Gesamtzusammensetzung) liegt.

8. Zusammensetzung in Form eines Gels zur Herstellung eines Nahrungsprodukts, wobei die Zusammensetzung Agar und Xanthan umfasst, wobei die Zusammensetzung dazu geeignet ist, zu schmelzen, wenn sie erneut auf eine Temperatur über 90 °C erhitzt wird, und sich in weniger als 5 Minuten aufzulösen, wenn sie zu siedendem Wasser gegeben wird.

9. Zusammensetzung nach einem der Ansprüche 1 bis 8, die durch Hitze reversibel ist.

10. Zusammensetzung nach einem der Ansprüche 1 bis 9, wobei das Nahrungsprodukt eine Sauce, Suppe, ein Fond, eine Brühe, Suppenbasis oder ein Jus ist.

11. Verfahren zur Herstellung einer Zusammensetzung in Form eines Gels zur Herstellung eines Nahrungsprodukts, das die folgenden Schritte umfasst:
a) Hinzufügen von Geliermitteln, die mindestens Agar und Xanthan einschließen, zu Wasser, und Mischen,
b) Erhitzen auf eine Temperatur von mindestens 75 °C, vorzugsweise mindestens 80 °C,
c) Hinzufügen von Salz und Aromen, und Mischen,
d) Erhitzen auf eine Temperatur von mindestens 75 °C, vorzugsweise mindestens 80 °C, für eine Zeit, die ausreicht, um die Mischung zu pasteurisieren, und
e) Kühlen auf Raumtemperatur, um das Gel zu bilden.

12. Verfahren nach Anspruch 11, ferner umfassend das Herstellen einer Vormischung aus den Geliermitteln mit Maltodextrin oder Zucker und/oder Stärke.

13. Verfahren nach Anspruch 11 oder Anspruch 12, ferner umfassend das Hinzufügen von Fett oder Öl nach dem Mischen der Geliermittel.

14. Verwendung einer Zusammensetzung nach einem der Ansprüche 1 bis 10 zur Herstellung eines Nahrungsprodukts.

## Revendications

1. Composition sous la forme d'un gel pour la préparation d'un produit alimentaire, la composition comprenant :
a) de l'eau en une quantité de 30 à 70 % (en poids de la composition totale),
b) des arômes en une quantité de 1 à 40 % (en poids de la composition totale),
c) du sel en une quantité de 10 à 25 % (en poids de la composition totale) et
d) des agents gélifiants en une quantité de 0,15 à 12 % (en poids de la composition totale),
dans laquelle les agents gélifiants comprennent au moins de l'agar et du xanthane.

2. Composition selon la revendication 1, dans laquelle la quantité d'agents gélifiants va de 0,2 à 2 % (en poids de la composition totale).

3. Composition selon la revendication 1 ou la revendication 2, dans laquelle le rapport d'agar et de xanthane se trouve dans la plage allant de 80:20 à 20:80, de préférence 70:30 à 30:70, plus préférablement 50:50 à 60:40.

4. Composition selon l'une quelconque des revendications 1 à 3, dans laquelle les agents gélifiants comprennent en outre de l'amidon ou du carraghénane.

5. Composition selon l'une quelconque des revendications 1 à 4, comprenant en outre de la matière grasse ou de l'huile en une quantité de 1 à 10 % (en poids de la composition totale).

6. Composition selon l'une quelconque des revendications 1 à 6, dans laquelle la quantité d'eau se trouve dans la plage allant de 40 à 60 %, de préférence 45 à 60 % (en poids de la composition totale).

7. Composition selon l'une quelconque des revendications 1 à 6, dans laquelle la quantité d'arômes se trouve dans la plage allant de 1 à 40 %, de préférence 5 à 15 % (en poids de la composition totale).

8. Composition sous la forme d'un gel pour la préparation d'un produit alimentaire, la composition comprenant de l'agar et du xanthane, où la composition est apte à fondre lorsqu'elle est réchauffée à une température supérieure à 90 °C et à se dissoudre lorsqu'elle est ajoutée à de l'eau bouillante en moins de 5 minutes.

9. Composition selon l'une quelconque des revendications 1 à 8, qui est réversible à la chaleur.

10. Composition selon l'une quelconque des revendications 1 à 9, dans laquelle le produit alimentaire est une sauce, une soupe, un potage, un bouillon, une base de soupe ou sauce à base de jus.

11. Procédé de préparation d'une composition sous la forme d'un gel pour la préparation d'un produit alimentaire comprenant les étapes suivantes :
a) ajout d'agents gélifiants incluant au moins de l'agar et du xanthane à de l'eau et mélange,
b) chauffage à une température d'au moins 75 °C, de préférence au moins 80 °C,
c) ajout de sel et d'arômes et mélange,
d) chauffage à une température d'au moins 75 °C, de préférence au moins 80 °C, pendant une période suffisante pour pasteuriser le mélange et
e) refroidissement à la température ambiante pour former le gel.

12. Procédé selon la revendication 11, comprenant en outre la réalisation d'un mélange préalable des agents gélifiants avec de la maltodextrine ou du sucre et/ou de l'amidon.

13. Procédé selon la revendication 11 ou la revendication 12, comprenant en outre l'ajout de matière grasse ou d'huile après mélange des agents gélifiants.

14. Utilisation d'une composition selon l'une quelconque des revendications 1 à 10 pour la préparation d'un produit alimentaire.
